# EUROPÄISCHE PATENTSCHRIFT

(11) **EP 0 645 908 B1**
(45) Veröffentlichungstag und Bekanntmachung des Hinweises auf die Patenterteilung: **15.01.2003**
(21) Anmeldenummer: 94113020.5
(22) Anmeldetag: 20.08.1994
(51) Int. Cl.: H04L 5/22

(54) **Zeitmultiplex-Verfahren**
Method for time-division multiplexing
Procédé de multiplexage par partage du temps

(30) Priorität: 03.09.1993 DE 4329733
(43) Veröffentlichungstag der Anmeldung: 29.03.1995
(73) Patentinhaber: ALCATEL, 75008 Paris (FR)
(72) Erfinder: Heidemann, Rolf, Dr., D-71732 Tamm (DE); Krimmel, Heinz, D-70825 Korntal-Münchingen (DE); Otterbach, Jürgen, D-71229 Leonberg (DE)
(74) Vertreter: Kugler, Hermann, Dipl.-Phys.

(56) Entgegenhaltungen:
- EP-A- 0 311 251
- EP-A- 0 553 610
- US-A- 4 912 706

## Beschreibung

Die Erfindung betrifft ein Zeitmultiplex-Verfahren zur Übertragung von mindestens zwei Digitalsignalen mit gleicher Bitfolgefrequenz.

Solche Verfahren sind allgemein bekannt, z.B. aus dem Lehrbuch Bocker P., "Datenübertragung, Band 2, Einrichtungen und Systeme", Springer-Verlag, Berlin, Heidelberg, New York, 1979, Seiten 91 bis 103.

Bei den dort beschriebenen Zeitmultiplex-Systemen werden u.a. die Nutzbits der einzelnen Kanäle bitweise verschachtelt. Die Bitdauern der einzelnen Kanäle im Zeitmultiplex-Signal sind dabei gleich lang, d.h. innerhalb eines Rahmens des Zeitmultiplex-Signals nimmt jeder Kanal die gleiche Zeitdauer ein.

Ein im Empfänger enthaltener Demultiplexer teilt die im Zeitmultiplex-Signal enthaltenen Bits der verschiedenen Kanäle wieder den einzelnen Kanälen zu. Falls das Zeitmultiplex-Signal von mehreren Empfängern empfangen wird, sind alle Empfänger für die gemeinsame Bitfolgefrequenz ausgelegt.

Diese Empfänger haben eine Tiefpaß-Filterfunktion mit einer endlichen Bandbreite, was bewirkt, daß der Empfänger eine gewisse Zeit benötigt, bis er eingeschwungen ist, um dann das Signal abtasten zu können.

Die Zeitdauer, die ein Kanal innerhalb eines Rahmens belegt, und die auch als Zeitschlitz bezeichnet wird, darf somit nicht zu kurz sein: Ein Einschwingen des Empfängers beim Empfang einer logischen "1" muß gewährleistet sein.

Da die Erfindung im Zusammenhang mit einem optischen Übertragungssystem steht, wird sie anhand eines optischen Übertragungssystems beschrieben; sie ist aber auch für elektrische Übertragungssysteme anwendbar.

Aus L. Adnet, et al, "Optoelektronik in der Teilnehmeranschlußleitung", Elektrisches Nachrichtenwesen, 4. Quartal 1992, Seiten 58 bis 65, ist ein optisches Übertragungssystem bekannt.

Dort werden zwischen Vermittlungs- und Verteileinrichtung und den Netzabschlüssen optische Signale über ein passives optisches Netzwerk übertragen. Das für die Teilnehmer bestimmte Signal wird über das mit optischen Verteilern aufgebaute Netz von einem Sender aus auf alle Netzabschlüsse verteilt. Die an dem passiven optischen Netzwerk angeschlossenen Empfänger sind an eine gemeinsame Bifolgefrequenz angepaßt.

Entsteht nun an einem Netzabschluß das Problem, einen höheren Informationsbedarf, d.h. es soll ein zusätzlicher Kanal bereitgestellt werden, zu befriedigen, kann dies durch Zeitmultiplex-Übertragung erreicht werden.

Bei bekannten Zeitmultiplex-Verfahren, bei denen Signale gleicher Bitdauer zu einem Zeitmultiplex-Signal zusammengefaßt werden, ergibt sich die Dauer eines Zeitschlitzes aus der Bitdauer eines Signals dividiert durch die Zahl der Signale.

Für Empfänger, die nach wie vor nur an einem einzigen Signal (Kanal) interessiert sind, besteht das Problem, dieses Signal dem Zeitmultiplex-Signal zu entnehmen, da bei unverändertem Rahmen die Zeitschlitze kürzer werden; die Einschwingdauer der Empfänger ist zu lang, um das Signal richtig auszuwerten.

Demnach wäre mit herkömmlichen Zeitmultiplex-Systemen ein höherer Informationsbedarf nur dadurch zu befriedigen, daß alle Empfänger umgerüstet werden. Dies wäre ohne eine Unterbrechung des Dienstes nicht möglich. Desweiteren wäre die Umrüstung mit hohen Kosten verbunden, da auch die Empfänger der Netzabschlüsse umgerüstet werden müßten, die einen unveränderten Informationsbedarf haben.

Der Erfindung liegt die Aufgabe zugrunde, ein Zeitmultiplex-Verfahren anzugeben, bei dem ein Zeitmultiplex-Signal erzeugt wird, das von allen Empfängern ausgewertet werden kann, d.h., daß alle Empfänger die für sie vorgesehenen Informationen entnehmen können. Ein diese Aufgabe lösendes Verfahren ist Gegenstand des Anspruchs 1.

Vorteilhafte Weiterbildungen der Erfindung ergeben sich aus den Unteransprüchen.

Ein Vorteil der Erfindung ist, daß bei bestehenden Systemen die Empfänger sukzessiv je nach individuellem Informationsbedarf umgerüstet werden können.

Die Erfindung wird nun anhand der Zeichnungen durch Beispiele näher erläutert. Es zeigen:
- Fig. 1: die Bildung eines Zeitmultiplex-Signals aus zwei Digitalsignalen A und B,
- Fig. 2: die Bildung eines Zeitmultiplex-Signals aus drei Digitalsignalen A, B und C,
- Fig. 3: ein Übertragungssystem, bei dem das neue Zeitmultiplex-Verfahren angewendet wird.

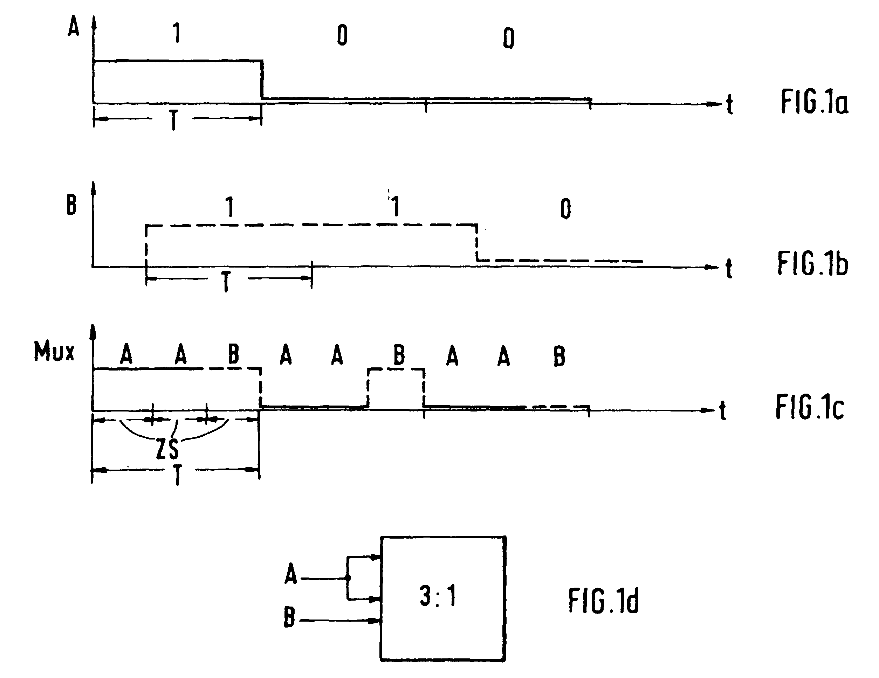

In Fig. 1 ist gezeigt, wie zwei Digitalsignale A, B zu einem Zeitmultiplex-Signal Mux zusammengefügt werden. Fig. 1a zeigt einen Teil des Digitalsignals A mit den Bits "1", "0", "0". In Fig. 1b ist ein Teil des Digitalsignals B gezeigt mit den Bits "1", "1", "0". Die Digitalsignale A, B haben eine gleiche Bitdauer T und somit auch gleiche Bitfolgefrequenz. Zur besseren Unterscheidung ist das Digitalsignal B gestrichelt gezeichnet.

Das daraus gebildete Zeitmultiplex-Signal Mux ist in Fig. 1c gezeigt. Die beiden Digitalsignale A, B sind dabei zeitlich nacheinander in periodisch wiederkehrender Weise angeordnet. Die Periode dieses Vorgangs bildet einen Rahmen, dessen Dauer gleich der Bitdauer T der Digitalsignale A, B ist.

Durch dieses Zeitmultiplex-Verfahren wird der Rahmen in k = 3 Zeitschlitze ZS aufgeteilt. Für die Übertragung des Digitalsignals A werden zwei Zeitschlitze ZS verwendet, dagegen für die Übertragung des Digitalsignals B nur ein Zeitschlitz ZS. Bezogen auf die Zeitschlitze ZS hat das Zeitmuliplex-Signal Mux die dreifache Bitfolgefrequenz der jeweiligen Digitalsignale A, B. Die Aufteilung des Rahmens auf die Digitalsignale A, B ist durch eingezeichnete Buchstaben A, B verdeutlicht.

Fig. 1d) zeigt, wie die Digitalsignale A und B einem 3:1 Multiplexer zugeführt werden. Durch den 3:1 Multiplexer werden drei Eingangssignale (2 x A, 1 x B) in einem Rahmen zusammengefaßt.

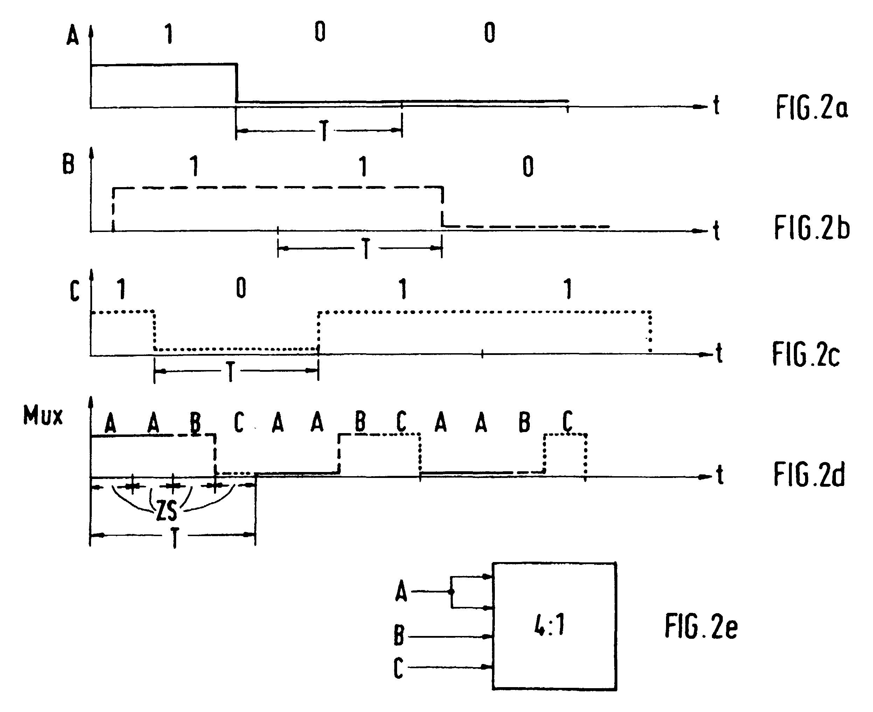

In Fig. 2 ist gezeigt, wie drei Digitalsignale A, B, C zu einem Zeitmultiplex-Signal Mux zusammengefaßt werden. Die Digitalsignale A, B entsprechen den in Fig. 1 gezeigten. Der in Fig. 2c gepunktet gezeichnete Teil des Digitalsignals C hat die Bits "1", "0", "1", "1". Das aus diesen Digitalsignalen gebildete Zeitmultiplex-Signal Mux ist in Fig. 2d gezeigt.

Alle Signale haben die gleiche Bitdauer T. Der Rahmen wird durch das Zeitmultiplex-Verfahren in k = 4 Zeitschlitze ZS eingeteilt. Für die Übertragung des Digitalsignals A werden zwei Zeitschlitze ZS verwendet, dagegen für die Übertragung der Digitalsignale B und C jeweils nur einer.

Bezogen auf die Zeitschlitze ZS hat das Zeitmultiplex-Signal Mux die vierfache Bitfolgefrequenz der jeweiligen Digitalsignale A, B, C.

Fig. 2e zeigt, wie die Digitalsignale A, B und C einem 4:1 Multiplexer zugeführt werden. Durch den 4:1 Multiplexer werden vier Eingangssignale (2 x A, 1 x B, 1 x C) in einem Rahmen zusammengefaßt

Zwei Digitalsignale A, B, wie z.B. die in Fig. 1 gezeigten, können in einem Rahmen auch so zusammengefaßt werden, daß der Rahmen in k = 4 Zeitschlitze ZS aufgeteilt wird. Für die Übertragung des Digitalsignals A werden dabei drei Zeitschlitze ZS verwendet, dagegen für die Übertragung des Digitalsignals B nur einer. Damit wird die Bitfolgefrequenz vervierfacht.

Haben die Digitalsignale A, B, C eine Bitfolgefrequenz von 2,5 GBit/s, beträgt die Bitdauer T und die Dauer des Rahmens 400 ps. In dem in Fig. 1c gezeigten Zeitmultiplex-Signal Mux hat jeder Zeitschlitz ZS eine Dauer von 133,3 ps. Es ergibt sich somit eine Bitfolgefrequenz des Zeitmultiplex-Signals von 7,5 GBit/s, wobei die Bitfolgefrequenz der Information nur 5 GBit/s beträgt, da das Digitalsignal A im Zeitmultiplex-Signal doppelt so lange vorhanden ist, wie das Digitalsignal B.

In dem in Fig. 2d gezeigten Zeitmultiplex-Signal Mux hat jeder Zeitschlitz ZS eine Dauer von 100 ps, die Bitfolgefrequenz des Zeitmultiplex-Signals beträgt 10 GBit/s. Die Bitfolgefrequenz der Information beträgt 7,5 GBit/s, da das Digitalsignal A im Zeitmultiplex-Signal doppelt so lange vorhanden ist wie jeweils die Digitalsignale B, C.

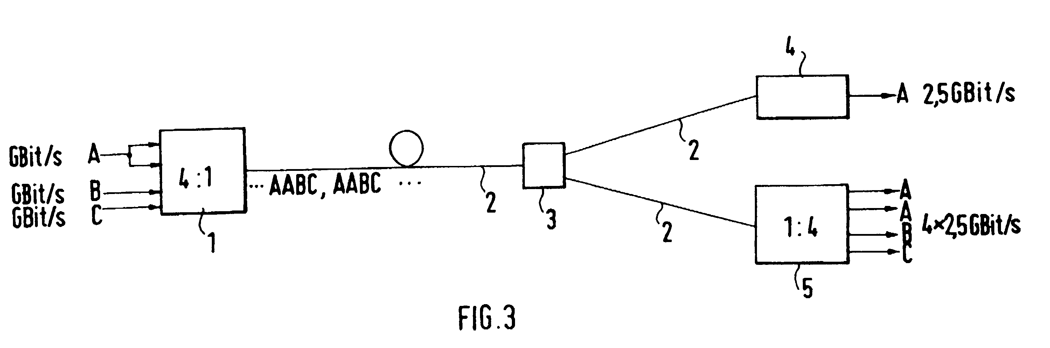

In Fig. 3 ist ein Übertragungssystem gezeigt, in dem das Zeitmultiplex-Verfahren angewendet wird. Das Übertragungssystem besteht im wesentlichen aus einem sendeseitigen 4:1 Multiplexer 1, einer Übertragungsstrecke 2, einem Verteiler 3 und zwei Empfängern 4, 5. Für diese vereinfachte Darstellung enthält der 4:1 Multiplexer nicht gezeigte Mittel, z.B. einen Laser, um das Zeitmultiplex-Signal auszusenden. Ebenso hat das Übertragungssystem empfangsseitig nicht gezeigte Mittel, z.B. Photodioden, Demultiplexer und Taktrückgewinnungseinrichtungen, um das Zeitmultiplex-Signal, z.B. das in Fig. 2c gezeigte, zu empfangen.

Die Digitalsignale A, B, C, die eine Bitfolgefrequenz von jeweils 2,5 GBit/s haben, werden dem 4:1 Multiplexer 1 zugeführt (2 x A, 1 x B, 1 x C) und das gebildete Zeitmultiplex-Signal wird über die Übertragungsstrecke 2 und den Verteiler 3, der das Zeitmultiplex-Signal in zwei gleiche Anteile aufteilt, zu dem ersten Empfänger 4 und dem zweiten Empfänger 5 übertragen. Der erste Empfänger 4, der das Zeitmultiplex-Signal mit 2,5 GHz abtastet, kann nur das Digitalsignal A auswerten.

Der zweite Empfänger 5, der das Zeitmultiplex-Signal mit einer Frequenz von 10 GHz abtastet, wertet das Digitalsignal B und das Digitalsignal C aus. Er kann aber auch gleichzeitig das Digitalsignal A auswerten.

Ein Teilnehmer, der am Empfänger 5 angeschlossen ist, kann somit vier Digitalsignale mit einer Bitfolgefrequenz von jeweils 2,5 GBit/s empfangen.

Durch dieses Zeitmultiplex-Verfahren bleibt die Länge des Rahmens unverändert. Die Aufteilung und die Länge der Zeitschlitze ZS innerhalb des Rahmens ist so, daß die installierten Empfänger dem Zeitmultiplex-Signal das für sie vorgesehene Digitalsignal entnehmen können.

Die Zeitschlitzdauer, die für die Übertragung des Digitalsignals A verwendet wird, ist ausreichend dafür, daß der erste Empfänger 4 einschwingt. Für die Auswertung der Digitalsignale B und C ist seine Einschwingdauer zu lang.

Der zweite Empfänger 5 ist so ausgelegt, daß seine Einschwingdauer kurz genug ist, um während eines Zeitschlitzes, in dem das Digitalsignal A oder B übertragen wird, einzuschwingen. Sein 4:1 Demultiplexer kann also an seinen Ausgängen sowohl das Digitalsignal A als auch das Digitalsignal B als auch das Digitalsignal C ausgeben.

In den Beispielen ist das Digitalsignal, für das mindestens zwei Zeitschlitze verwendet werden, am Anfang eines Rahmens angeordnet; es kann aber auch an einer anderen Stelle des Rahmens angeordnet sein.

Die Synchronisation eines Demultiplexers ist kein Problem, da die Rahmencharakteristik von mindestens zwei gleichen Zeitschlitzen gut erkennbar ist.

## Patentansprüche

1. Bitweises Zeitmultiplex-Verfahren zur Übertragung von n Digitalsignalen gleicher Bitfolgefrequenz (A, B, C) bei dem aus diesen Digitalsignalen ein Zeitmultiplex-Signal (Mux) mit einem k Zeitschlitze (ZS) enthaltenen Rahmen gebildet wird, dessen Dauer gleich der Bitdauer (T) eines der Digitalsignale ist, **dadurch gekennzeichnet, daß** k>n>1 gilt und daß mindestens zwei, im Rahmen zeitlich nacheinander angeordnete Zeitschlitze (ZS) für eines der Digitalsignale (A) verwendet werden und jeweils ein Zeitschlitz für jedes der verbleibenden Digitalsignale (B,C) verwendet wird.

2. Zeitmultiplex-Verfahren nach Anspruch 1, bei dem aus zwei Digitalsignalen ein Zeitmultiplex-Signal (Mux) gebildet wird und der Rahmen in drei Zeitschlitze (ZS) aufgeteilt wird, **dadurch gekennzeichnet, daß** für ein Digitalsignal zwei Zeitschlitze (ZS) verwendet werden und für das andere ein Zeitschlitz (ZS) verwendet wird.

3. Zeitmultiplex-Verfahren nach Anspruch 1, bei dem aus zwei Digitalsignalen ein Zeitmultiplex-Signal gebildet wird und der Rahmen in vier Zeitschlitze (ZS) aufgeteilt wird, **dadurch gekennzeichnet, daß** für ein Digitalsignal drei Zeitschlitze (ZS) verwendet werden und für das andere ein Zeitschlitz (ZS) verwendet wird.

4. Zeitmultiplex-Verfahren nach Anspruch 1, bei dem aus drei Digitalsignalen ein Zeitmultiplex-Signal (Mux) gebildet wird und der Rahmen in vier Zeitschlitze (ZS) aufgeteilt wird, **dadurch gekennzeichnet, daß** für ein Digitalsignal zwei Zeitschlitze (ZS) verwendet werden und für die beiden anderen jeweils ein Zeitschlitz (ZS) verwendet wird.

5. k:1 Multiplexer (1), der mindestens drei Eingänge und einen Ausgang aufweist, wobei mindestens zwei benachbarte Eingänge miteinander verbunden sind zwecks Zuführung ein und desselben Digitalsignals (A) zu diesen verbundenen Eingängen, und der geeignet ist, n Digitalsignale (A, B, C) auf k Zeitschlitze (ZS) zur Durchführung des bitweisen Zeitmultiplex-Verfahrens nach Anspruch 1 derart aufzuteilen und anschließend zu einem Zeitmultiplex-Signal zusammenzufassen, daß mindestens zwei, im Rahmen zeitlich nacheinander angeordnete Zeitschlitze (ZS) für eines der Digitalsignale (A) verwendet werden und jeweils ein Zeitschlitz für jedes der verbleibenden Digitalsignate (B, C) verwendet wird.

6. Übertragungssystem, beinhaltend einen k:1 Multiplexer (1) nach Anspruch 5, desser Aus mit mindestens zwei Empfängern (4, 5) verbunden ist, wobei mindestens zwei der Empfänger (4, 5) zum Empfang von unterschiedlichen Digitalsignalen (A, B, C) mit unterschiedlichen Abtastfrequenzen arbeiten, wobei mindestens eine Abtastfrequenz an die mindestens zwei, im Rahmen zeitlich nacheinander angeordneten Zeitschlitze angepasst ist und mindestens eine andere Abtastfrequenz an einen Zeitschlitz angepasst ist, so daß sich mindestens zwei Abtastfrequenzen um mindestens den Faktor zwei unterscheiden.

## Claims

1. Bitwise time-division multiplex method for the transmission of n digital signal of equal bit rate (A, B, C), in which there is formed from these digital signals a time-division multiplex signal (Mux) with a frame, containing k time slot (ZS), the duration of which is equal to the bit duration (T) of one of the digital signals, **characterized in that** k > n > 1 is applicable and that at least two time slots (ZS), ordered in temporal succession in the frame, are used for one of the digital signals (A) and one time slot is respectively used for each of the remaining digital signals (B, C).

2. Time-division multiplex method according to Claim 1, in which a time-division multiplex signal (Mux) is formed from two digital signals and the frame is divided into three time slots (ZS), **characterized in that** two time slots (ZS) are used for one digital signal and one time slot (ZS) is used for the other.

3. Time-division multiplex method according to Claim 1, in which a time-division multiplex signal is formed from two digital signals and the frame is divided into four time slots (ZS), **characterized in that** three time slots (ZS) are used for one digital signal and one time slot (ZS) is used for the other.

4. Time-division multiplex method according to Claim 1, in which a time-division multiplex signal (Mux) is formed from three digital signals and the frame is divided into four time slots (ZS), **characterized in that** two time slots (ZS) are used for one digital signal and one time slot (ZS) is used for each of the other two.

5. k:1 multiplexer (1) which has at least three inputs and one output, at least two adjacent inputs being connected to one another for the purpose of supplying one and the same digital signal (A) to these connected inputs, and which is suitable for distributing n digital signals (A, B, C) to k time slots (ZS) for the execution of the bitwise time-division multiplex method according to Claim 1 and subsequently combining them to form a time-division multiplex signal in such a way that at least two time slots (ZS), ordered in temporal succession in the frame, are used for one of the digital signals (A) and one time slot is respectively used for each of the remaining digital signals (B, C).

6. Transmission system, comprising a k:1 multiplexer (1) according to Claim 5, the output of which is connected to at least two receivers (4, 5), at least two of the receivers (4, 5) operating to receive different digital signals (A, B, C) at different sampling frequencies, at least one sampling frequency being adapted to the at least two time slots ordered in temporal succession in the frame and at least one other sampling frequency being adapted to one time slot so that at least two sampling frequencies are differentiated by at least the factor two.

## Revendications

1. Procédé de multiplexage temporel bit par bit pour la transmission de signaux numériques n de même fréquence d'échantillonnage (A, B, C), lors duquel un signal de multiplexage temporel (Mux) contenant une trame d'intervalles de temps (ZS) k est formé à partir de ces signaux numériques, trame dont la durée est égale à la période de bits (T) d'un des signaux numériques, **caractérisé en ce que** k>n>1 s'applique et qu'au moins deux intervalles de temps (ZS) disposés chronologiquement l'un derrière l'autre dans la trame sont utilisés pour l'un des signaux numériques (A) et un intervalle de temps est utilisé pour chacun des signaux numériques (B, C) restants.

2. Procédé de multiplexage temporel selon la revendication 1, lors duquel un signal de multiplexage temporel (Mux) est formé à partir de deux signaux numériques et la trame est partagée en trois intervalles de temps (ZS), **caractérisé en ce que** pour un signal numérique on utilise deux intervalles de temps (ZS) et pour l'autre on utilise un intervalle de temps (ZS).

3. Procédé de multiplexage temporel selon la revendication 1, lors duquel un signal de multiplexage temporel est formé à partir de deux signaux numériques et la trame est partagée en quatre intervalles de temps (ZS), **caractérisé en ce que** pour un signal numérique on utilise trois intervalles de temps (ZS) et pour l'autre on utilise un intervalle de temps (ZS).

4. Procédé de multiplexage temporel selon la revendication 1, lors duquel un signal de multiplexage temporel (Mux) est formé à partir de trois signaux numériques et la trame est partagée en quatre intervalles de temps (ZS), **caractérisé en ce que** pour un signal numérique on utilise deux intervalles de temps (ZS) et pour les deux autres on utilise pour chacun un intervalle de temps (ZS).

5. Multiplexeur k:1 (1), qui présente au moins trois entrées et une sortie, deux entrées voisines étant reliées l'une à l'autre dans le but d'introduire un seul et même signal numérique (A) vers ces deux entrées reliées entre elles, et qui est apte à répartir les signaux numériques n (A, B, C) sur les intervalles de temps (ZS) k pour la réalisation du procédé de multiplexage temporel bit par bit selon la revendication 1 et ensuite de les réunir en un signal de multiplexage temporel, de telle façon qu'au moins deux intervalles de temps (ZS) disposés chronologiquement l'un derrière l'autre dans la trame sont utilisés pour l'un des signaux numériques (A) et un intervalle de temps est utilisé pour chacun des signaux numériques (B, C) restants.

6. Système de transmission, comprenant un multiplexeur k:1 (1) selon la revendication 5, la sortie étant reliée à aux moins deux récepteurs (4, 5), moyennant quoi au moins deux des récepteurs (4, 5) travaillent à la réception de signaux numériques différents (A, B, C) avec des fréquences d'échantillonnage différentes, moyennant quoi au moins une des fréquences d'échantillonnage est adaptée au moins à deux intervalles de temps disposés chronologiquement l'un après l'autre dans la trame, et au moins une autre fréquence d'échantillonnage est adaptée à un intervalle de temps, de façon à ce qu'au moins deux fréquences d'échantillonnage se différencient par au moins le facteur deux.
